# EUROPÄISCHE PATENTSCHRIFT

(11) **EP 1 298 005 B1**
(45) Veröffentlichungstag und Bekanntmachung des Hinweises auf die Patenterteilung: **14.09.2005**
(21) Anmeldenummer: 02015409.2
(22) Anmeldetag: 11.07.2002
(51) Int. Cl.: B60R 16/02

(54) **Verfahren zur Bereitstellung eines Wartungsalgorithmus**
Procedure for providing a maintenance algorithm
Procédé pour fournir un algorithme de maintenance

(30) Priorität: 28.09.2001 DE 10148214
(43) Veröffentlichungstag der Anmeldung: 02.04.2003
(73) Patentinhaber: DaimlerChrysler AG, 70567 Stuttgart (DE)
(72) Erfinder: Crämer, Regine, 70597 Stuttgart (DE); Felger, Ursula, 73614 Schorndorf (DE); Kaufmann, Rainer, Dr., 70191 Stuttgart (DE); Krauth, Andrej, 73770 Denkendorf (DE); Trost, Jürgen, Dr., 72661 Grafenau (DE)

(56) Entgegenhaltungen:
- WO-A-90/09645
- WO-A-96/27171
- FR-A- 2 542 478
- US-A- 5 844 473

## Beschreibung

Die Erfindung betrifft ein Verfahren zur Bereitstellung eines Wartungsalgorithmus für eine Fahrzeugflotte, mit welchem in jedem Fahrzeug der Fahrzeugflotte eine Wartungsinformation ermittelt und angezeigt werden kann.

Aus der DE 3110774 A1 ist ein Wartungsalgorithmus zur Ermittlung von Wartungs- und Pflegedienstintervallen bekannt, welcher ermöglicht Wartungs- und Pflegedienste in Abhängigkeit von Verschleißzuständen durchzuführen. Hierzu werden Betriebsgrößen erfasst und mit vorgegebenen Schwellwerten verglichen. Hat eine Betriebsgröße einen vorgegebenen Schwellwert überschritten, so wird dem Fahrer angezeigt, dass ein Wartungsdienst durchzuführen ist.

Aus der DE 4446512 A1 ist eine Vorrichtung zur Durchführung eines Fahrzeugtests und zur Auswertung von Fahrzeugfehlern bekannt. Von der Vorrichtung werden Ausfall- und Störungsmeldungen des Fahrzeugs über ein Mobilfunktelefon an eine Zentrale gesendet, welche ihrerseits Regelungsinformationen und Warnungsmeldungen an das Fahrzeug sendet, um den Fehler zu beheben oder den Fahrer dazu veranlassen eine Werkstatt aufzusuchen.

Weiterhin ist aus der DE 19853000 A1 ein Verfahren zur Versorgung von Kraftfahrzeugen mit Daten bekannt, welche zur Funktionsüberwachung der Fahrzeuge dienen. Die Daten, beispielsweise Betriebs- und Diagnosedaten, werden drahtlos an eine Zentrale übertragen, welche wiederum Parameter, Programme oder Programmteile an das Fahrzeug überträgt. Die Daten, welche an das Fahrzeug übertragen werden, werden im Fahrzeug zur Diagnose beispielsweise des Bremssystems oder zur Information über Bremsbelagstärken herangezogen. Die Schrift gibt jedoch keinerlei Hinweis darauf, wie ein Wartungs- oder Diagnosealgorithmus optimiert werden kann.

Aus de gattungsbildenden WO90/09645 A1 ist ein Fahrzeugmonitoring System bekannt. Mit fahrzeugseitigen Sensoren werden die Betriebszustände des Fahrzeuges erfasst und onboard aufgezeichnet. Die aufgezeichneten Daten werden per Funk an einen Zentralrechner übertragen, auf dem ein Diagnoseprogramm die übertragenen Daten auswertet. Die Auswertung beinhaltet eine Wartungsplanung für das einzelne Fahrzeug innerhalb einer Fahrzeugflotte und erstellt eine Meldung, die dem Fahrer des Fahrzeugs gegebenenfalls auf eine Fehlfunktion hinweist und ihn auffordert einen Service aufzusuchen. Zusätzlich kann gegebenenfalls der Geschwindigkeitssensor eines Fahrzeugs calibriert werden. Es ist im Unterschied zur Efindung weder vorgesehen, den zugrunde liegenden Wartungsalgorithmus zu verbessern, noch ist vorgesehen die Daten aller Fahrzeuge auszuwerten, um einen verbesserten Wartungsalgorithmus zu erstellen.

Aufgabe der Erfindung ist es, ein Verfahren zur Bereitstellung eines Wartungsalgorithmus für eine Fahrzeugflotte anzugeben, welches zu einer Optimierung des Wartungsalgorithmus führt.

Diese Aufgabe wird erfindungsgemäß durch die Merkmale des Anspruchs 1 gelöst.

Bei dem erfindungsgemäßen Verfahren zur Bereitstellung eines Wartungsalgorithmus für eine Fahrzeugflotte werden in jedem Kraftfahrzeug der Fahrzeugflotte Sensordaten erfasst, welche indikativ für eine Belastung oder Abnutzung von Fahrzeugkomponenten, z.B. elektrischen, elektronischen oder mechanischen Aggregaten im Fahrzeug sind. Die Fahrzeugflotte besteht in der Regel aus zahlreichen bereits an Kunden ausgelieferte Fahrzeuge.

Aus den erfassten Sensordaten werden Belastungsgrößen ermittelt. Hierzu können mehrere Sensordaten zu Kollektiven oder Belastungsgrößen verknüpft werden, beispielsweise kann als Belastungsgröße die Fahrzeuggeschwindigkeit aus den erfassten Raddrehzahlen aller vier Räder ermittelt werden. Andere Beispiele für Belastungsgrößen sind die Anzahl der ABS-Bremsungen, die Anzahl der Startvorgänge oder die geleistete Kühlarbeit der Klimaanlage, der Kraftstoffverbrauch, die Außentemperatur, die Abgasqualität, die Abgasmenge oder die Abgastemperatur. Insbesondere können mehrere Einzeldaten (Sensordaten oder Belastungsgrößen) zu einem Datenverbund (beispielsweise in Form einer Datenmenge oder eines mehrdimensionalen Datenfelds) zusammengefasst werden, welcher dann wiederum eine Belastungsgröße darstellen kann.

Eine Belastungsgröße kann sich spezifisch auf eine Fahrzeugkomponente beziehen, so dass mittels einer Belastungsgröße eine Aussage über die erfolgte Belastung der Fahrzeugkomponente möglich ist. Ein Beispiel für eine Belastungsgröße, welche spezifisch für die Belastung des Anlassers ist, ist die Anzahl der Startvorgänge. Eine andere auf den Anlasser bezogene Belastungsgröße kann beispielsweise die Außentemperatur und die Motortemperatur während des Startvorgangs, oder die Zeitdauer des Startvorgangs mit umfassen. Eine weitere Belastungsgröße, welche für die Ermittlung der Batterielebensdauer herangezogen wird, kann beispielsweise zusätzlich den Batterieladezustand während eines Startvorgangs umfassen. Einfache Belastungsgrößen sind die Betriebsdauer einer Fahrzeugkomponente und die Laufleistung des Fahrzeugs.

Erfindungsgemäß werden die Belastungsgrößen für einen vorgebbaren Zeitraum, insbesondere seit der ersten Inbetriebnahme eines Fahrzeugs, seit der ersten Inbetriebnahme einer Fahrzeugkomponente, seit der letzten Wartung des Fahrzeugs oder seit der letzten Datenübertragung in einer Speichervorrichtung im Fahrzeug gespeichert. Mit diesen Daten kann eine Abschätzung der Gesamtbelastung einer Komponente im Fahrzeug vorgenommen werden. Zu vorgebbaren Zeitpunkten, insbesondere beim Eintreten eines verschleißbezogenen Ereignisses werden die gespeicherten Belastungsgrößen an eine Zentrale übermittelt, wobei vorzugsweise zusätzlich zu den Belastungsgrößen auch Verschleißgrößen an die Zentrale übermittelt werden. Die Verschleißgrößen kennzeichnen das verschleißbezogene Ereignis. Beispiele für verschleißbezogene Ereignisse sind der Ausfall einer Komponente, wie einer Lichtmaschine oder eines Leuchtmittels, oder die elektronische Erfassung der Abnutzung eines Bremsbelags bis zu einer durch die Erfassungsmittel vorgegebenen Schwelle. Beispiele für die entsprechenden Verschleißgrößen sind die von dem verschleißbezogenen Ereignis betroffenen Fahrzeugkomponenten, wie Lichtmaschine, Bremsbelag etc., die Uhrzeit und das Datum des verschleißbezogenen Ereignisses und die Art des Ereignisses.

Alternativ zur Übermittlung der Belastungs- und Verschleißgrößen an die Zentrale bei einem verschleißbezogenen Ereignis, werden die Belastungsgrößen in vorgebbaren Intervallen, beispielsweise bei jeder Wartung des Fahrzeugs an die Zentrale übermittelt.

Die Übermittlung der Daten an die Zentrale kann direkt, beispielsweise telematisch, oder indirekt über eine Diagnoseeinrichtung in einer Werkstatt oder über eine andere Datenerfassungs- und Übertragungsstelle erfolgen.

In der Zentrale werden die übermittelten Daten, insbesondere die Belastungs- und Verschleißgrößen und die Fahrzeugtypdaten erfasst, abgespeichert und zur Überprüfung des bisher eingesetzten Wartungsalgorithmus und gegebenenfalls zur Bereitstellung eines neuen verbesserten Wartungsalgorithmus herangezogen. In der Zentrale können zusätzlich zu den Verschleiß- und Belastungsgrößen auch Daten von Herstellern oder Daten aus der Forschung, der Entwicklung oder der Produktion zur Bereitstellung des neuen Wartungsalgorithmus herangezogen werden.

Vorteil des erfindungsgemäßen Verfahrens ist es, dass bei der Ermittlung einer Wartungsinformation, und insbesondere bei einer vorbeugenden Warnung des Fahrers über die voraussichtlich noch zur Verfügung stehende Zeit bis zum Ausfall oder Verschleiß einer Komponente das Erfahrungswissen berücksichtigt wird, welches mittels der erfassten Daten zahlreicher anderer Fahrzeuge bereitgestellt werden kann. Mit dem angegebenen Verfahren ist eine umfassende und schnelle Einbeziehung der Daten aus anderen Fahrzeugen möglich und der Wartungsalgorithmus kann durch Nutzung der Flottenerfahrung regelmäßig verbessert und aktualisiert werden. Weitere Vorteile sind eine Datenreduktion der Daten, welche im Fahrzeug (onboard) gespeichert, an die Zentrale übermittelt und in dieser ausgewertet werden. Diese Datenreduktion erfolgt zum einen durch die Einführung von Belastungsgrößen, welche die umfangreichen Sensordaten ersetzen und zum anderen durch die Übertragung der Daten genau dann, wenn ein verschleißbezogenes Ereignis eintritt. Dies erspart laufend alle Daten aus den Fahrzeugen der Fahrzeugflotte in der Zentrale zu sammeln und auszuwerten.

In einer Weiterbildung des Verfahrens werden die Daten eines verbesserten Wartungsalgorithmus, eines verbesserten Teils des Wartungsalgorithmus oder veränderte Parameter des Wartungsalgorithmus zu den Fahrzeugen einer Fahrzeugflotte übertragen und der verbesserte Wartungsalgorithmus wird mittels der übertragenen Daten in den betreffenden Fahrzeugen implementiert. Vorteil dieser Weiterbildung ist es, dass der verbesserte Wartungsalgorithmus nicht nur in neuen, noch auszuliefernden Fahrzeugen, sondern auch in allen bereits im Verkehr befindlichen Fahrzeugen implementiert wird.

Der Datenaustausch zwischen Fahrzeug und Zentrale kann an einen Werkstattaufenthalt gekoppelt sein oder an einem ständigen Standort des Fahrzeugs erfolgen, wird aber vorzugsweise drahtlos und während des normalen Fahrbetriebs eines Fahrzeugs stattfinden.

In einer vorteilhaften Ausgestaltung der Erfindung werden zur Verbesserung des Wartungsalgorithmus jeweils die Verschleiß- und Belastungsgrößen von Fahrzeugen gleichen Typs, insbesondere von Fahrzeugen vergleichbarer Konfiguration ausgewertet. Dies ist vorteilhaft, da das Wissen, welches aus den Daten von Fahrzeugen eines einzigen Typs erzeugt wird auf ein Fahrzeug desselben Typs und/oder auf Fahrzeuge gleicher oder ähnlicher Konfiguration leicht übertragbar ist. Gleiche Belastungsgrößen führen bei Fahrzeugen desselben Fahrzeugtyps zu vergleichbarem Verschleiß und insbesondere können Lebensdauer und Ausfallursachen von Komponenten auf Fahrzeuge ähnlicher Konfiguration übertragen werden.

In einer Ausgestaltung des Verfahrens wird in der Zentrale den Belastungs- und Verschleißgrößen ein Verschleißtyp zugeordnet.

Die Daten eines Verschleißtyps werden genau dann ausgewertet, wenn eine vorgebbare, signifikante Anzahl an verschleißbezogenen Ereignissen eines Verschleißtyps (Verschleißfälle mit vergleichbaren oder ähnlichen Randbedingungen) vorliegen, was beispielsweise mittels einer Schwellwertfunktion überprüft werden kann. Erfolgt eine Auswertung der verschleißbezogenen Ereignisse eines Verschleißtyps und ergibt diese Auswertung, dass der Wartungsalgorithmus verbessert werden kann, so werden die Daten zur Implementierung des verbesserten Wartungsalgorithmus an die Fahrzeuge des betreffenden Fahrzeugtyps mit der betreffenden Konfiguration übertragen, wobei auch mehrere Konfigurationen eines Fahrzeugtyps oder mehrere Fahrzeugtypen einer Fahrzeugkonfiguration von dem neuen Wartungsalgorithmus betroffen sein können.

Aus der Häufigkeit von verschleißbezogenen Ereignissen und aus einer Korrelation von erfassten Parametern, insbesondere aus korrelierenden Belastungsgrößen können in der Zentrale systematische Zusammenhänge zwischen Belastungsgrößen und Komponentenlebensdauer ermittelt werden, mittels welchen der Wartungsalgorithmus verbessert werden kann, beispielsweise durch Einbeziehung bisher nicht berücksichtigter Belastungsgrößen. Darüber hinaus kann ein Hersteller über die Schwachstellen einer Komponente oder eines Bauteils informiert werden. Durch die Weitergabe der Information über die Verschleißursachen an einen Fahrzeughersteller oder einen Zulieferer werden diese in die Lage versetzt, die Produktqualität im Hinblick auf die tatsächlichen Beanspruchungen, welcher eine Fahrzeugkomponente im realen Einsatz ausgesetzt ist, zu erhöhen.

In einer Weiterbildung des Verfahrens wird bei einem verschleißbezogenen Ereignis zusätzlich zu der Zentrale auch eine Werkstatt, ein Ersatzteillager, oder eine Verteilerstelle für Ersatzteile telematisch über den Verschleißtyp informiert, wobei die Information direkt vom Fahrzeug aus oder über die Zentrale erfolgen kann. Hierdurch kann eine Reparatur vorbereitet werden, indem ein benötigtes Ersatzteil angefordert oder der Versand eines Ersatzteils in die betreffende Region eingeleitet wird. In einer Werkstatt ist die benötigte Kapazität für die Durchführung der Reparaturarbeiten einplanbar. Die Standzeiten von Fahrzeugen können hierdurch weiter verkürzt werden.

Ein Fahrzeug, welches zur Durchführung des Verfahrens vorbereitet ist, weist eine Bordelektronik mit einem implementierten Wartungsalgorithmus auf, welcher die Belastungsgrößen heranzieht, um eine Wartungsinformation, beispielsweise einen Wartungszeitpunkt für eine Fahrzeugkomponente zu ermitteln. Die Wartungsinformation, welche optisch oder akustisch angezeigt werden kann, kann dem Fahrer des Fahrzeugs, einem Fahrzeughalter oder an eine Flottenverwaltung übermittelt werden. Die Bordelektronik ermöglicht zudem eine Datenübertragung an eine fahrzeugfremde Einrichtung, beispielsweise an eine Diagnosevorrichtung in einer Werkstatt oder eine telematische Übertragung an eine Zentrale.

Beispielsweise wird von der Bordelektronik ein optimaler Wartungszeitpunkt für eine Komponente des Fahrzeugs oder für das Gesamtfahrzeug ermittelt, indem geprüft wird, ob eine Betriebsgröße oder ein Belastungsgröße im Fahrzeug eine vorgebbare Schwelle überschreitet oder ob eine vorgebbare Abnutzung eingetreten ist. Es wird geprüft ob der ermittelte Wartungszeitpunkt innerhalb eines vorgebbaren Zeitraums oder innerhalb einer vorgebbaren Laufleistung liegt, und falls dies so ist, wird die Wartungsinformation dem Fahrer angezeigt.

Wird ein optimaler Wartungszeitpunkt für eine Komponente ermittelt, so erfolgt beispielsweise eine akustische oder optische Mitteilung darüber, dass die Lichtmaschine innerhalb von 3 Monaten gewartet werden muss, oder dass die Bremsbeläge noch 5000 Km Restlaufstrecke ermöglichen und es bleibt dem Fahrer/Fahrzeughalter vorbehalten, abzuwägen, ob er den Wartungszeitpunkt verschiebt und die Gefahr eines Ausfalls der betreffenden Komponente riskiert, oder ob er zum empfohlenen Zeitpunkt oder auch schnellstmöglich eine Fachwerkstatt aufsucht.

Wird der optimale Wartungszeitpunkt nicht für eine Komponente, sondern für das Gesamtfahrzeug ermittelt, so kann der Wartungsalgorithmus die ermittelten Verschleißzustände und/oder Restlebensdauern mehrerer oder aller Komponenten heranziehen. Der Fahrer wird beispielsweise informiert, indem eine Anzeige in einem Display erfolgt, welche ihn darauf hinweist, dass er innerhalb einer Laufleistung von 3000 Km eine Werkstatt aufsuchen sollte, um das Fahrzeug warten zu lassen.

In einer Weiterbildung des Verfahrens werden die Belastungsgrößen auch im Rahmen der (vorbeugenden) Wartung des Fahrzeugs an die Zentrale übermittelt. Da die (vorbeugende) Wartung vor dem Auftreten eines verschleißbezogenen Ereignisses erfolgte, wurden im Fahrzeug keine Verschleißgrößen erfasst. Die Übermittlung der Daten kann wiederum durch das Fahrzeug oder durch die Werkstatt erfolgen. Zusätzlich zu den Belastungsgrößen können auch Daten über den Zustand der betreffenden Komponente von der Werkstatt an die Zentrale übermittelt und zur Bereitstellung eines verbesserten Wartungsalgorithmus herangezogen werden.

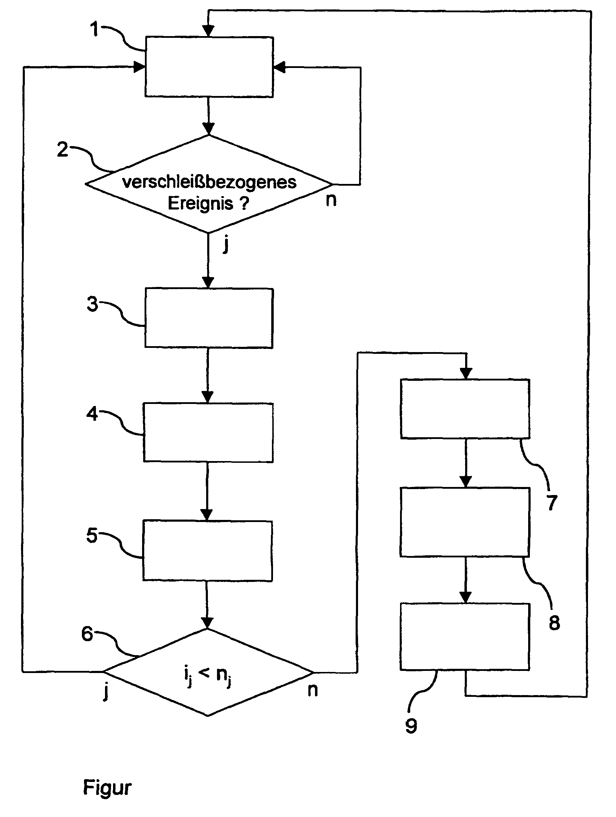

Nachfolgend wird eine vorteilhafte Ausführungsform des erfindungsgemäßen Verfahrens anhand der Zeichnung näher beschrieben:

Die einzige Figur zeigt ein Flussdiagramm einer vorteilhaften Ausführungsform des erfindungsgemäßen Verfahrens zur Bereitstellung eines Wartungsalgorithmus.

Bei Fahrzeugen, welche zur Durchführung des Verfahrens vorbereitet sind (Flottenfahrzeuge), werden in Schritt 1 fortlaufend im Fahrzeug Sensordaten erfasst, aus erfassten Sensordaten Belastungsgrößen ermittelt und die Belastungsgrößen in einem Speicher abgelegt. Tritt bei einem Fahrzeug ein verschleißbezogenes Ereignis ein, d.h. es fällt eine Komponente aus oder es wird elektronisch erfasst, dass bei einer Komponente eine vorgegebene Verschleißgrenze erreicht ist, so wird in Schritt 2 zu Schritt 3 verzweigt, ist dies nicht der Fall, so werden in Schritt 1 weiterhin die Belastungsgrößen abgespeichert.

Nach einem verschleißbezogenen Ereignis werden die gespeicherten Belastungsgrößen in Schritt 3 an eine Diagnoseeinrichtung in einer Werkstatt übermittelt. Dies geschieht beispielsweise im Rahmen einer Reparatur oder Wartung, welche durch das verschleißbezogene Ereignis erforderlich wird. In Schritt 4 werden in der Werkstatt zusätzlich die Verschleißgrößen erfasst und zusammen mit den Belastungsgrößen an eine Zentrale übertragen. Ergänzend zu den Verschleiß- und Belastungsgrößen werden Konfigurations- und/oder Typdaten des Fahrzeugs an die Zentrale übermittelt.

Alternativ oder ergänzend zu den Schritten 3 und 4 werden die Verschleißgrößen von einer Datenverarbeitungsvorrichtung im Fahrzeug erfasst und ebenso wie die Belastungsgrößen in einem Speicher abgelegt. Die Verschleiß- und die Belastungsgrößen werden in der Werkstatt an eine Diagnosevorrichtung und/oder telematisch vom Fahrzeug an eine Zentrale übertragen. Bei einer telematischen Übertragung an die Zentrale ist kein Werkstattaufenthalt zur Durchführung des Verfahrens nötig.

In der Zentrale werden in Schritt 5 die Belastungs- und Verschleißgrößen zusammen mit den Konfigurations- und Typdaten des Fahrzeugs einem Verschleißtyp j zugeordnet und gespeichert.

Optional kann in Schritt 5 von der Zentrale eine weitere Stelle, beispielsweise ein Zulieferer, eine Entwicklungs- oder Produktionsabteilung, eine Kundenbetreuung oder ein Ersatzteillager informiert werden.

In Schritt 6 wird überprüft, ob die Anzahl der verschleißbezogenen Ereignisse iⱼ eines Verschleißtyps j eine vorgebbare Anzahl nⱼ überschreitet. Hierbei ist der Schwellwert nⱼ eine Funktion, welche von dem betreffenden Fahrzeugtyp, der produzierten Fahrzeuge des betreffenden Fahrzeugtyps, der Zeit seit Produktionsbeginn und möglicherweise weiteren Parametern abhängt. Liegt die Anzahl der erfassten verschleißbezogenen Ereignisse iⱼ unter dem Schwellwert nⱼ, so wird die Anzahl der aufgetretenen verschleißbezogenen Ereignisse als nicht signifikant betrachtet und es wird zurück zu Schritt 1 verzweigt. Um verschleißbezogene Ereignisse, welche eine unvorhergesehene Häufigkeit aufweisen mit zu erfassen und auszuwerten, kann ein Verschleißtyp "sonstige Ausfälle" vorgesehen werden.

Ist das Ergebnis der Abfrage in Schritt 6, dass die Anzahl der verschleißbezogenen Ereignisse iⱼ eines Verschleißtyps j eine vorgebbare Anzahl nⱼ überschreitet, so wird zu Schritt 7 verzweigt. In Schritt 7 wird mittels der Daten zu einem Verschleißtyp j, welche in der Zentrale gespeichert sind, der bisherige, in den Fahrzeugen implementierte Wartungsalgorithmus überprüft und gegebenenfalls ein neuer Wartungsalgorithmus ermittelt und zur Übermittlung an die betreffenden Fahrzeuge (an die Fahrzeugflotte) bereit gestellt. Bei dem neuen verbesserten Wartungsalgorithmus wird beispielsweise ein Schwellwert für die Lebensdauer einer Komponente wie einer Lichtmaschine, eines Luftfilters oder eines Bremsbelags verändert oder die Gewichtung der ermittelten Belastungsgrößen wird geändert. Das Bereitstellen des neuen Wartungsalgorithmus erfolgt beispielsweise dadurch, dass ein Schwellwert für die Lebensdauer oder Laufleistung einer Fahrzeugkomponente gegenüber dem alten Wartungsalgorithmus verringert wird. Die Ermittlung und Bereitstellung des neuen Wartungsalgorithmus erfolgt vorzugsweise vollautomatisch durch eine Datenverarbeitungseinheit in der Zentrale.

In Schritt 8 werden von der Zentrale alle diejenigen Fahrzeuge ermittelt, bei welchen ein neuer, verbesserter Wartungsalgorithmus implementiert werden soll. Dies kann anhand einer Datenbank oder mittels einer Online-Abfrage von Fahrzeugdaten erfolgen. Die betroffenen Fahrzeuge sind beispielsweise alle Fahrzeuge desselben Typs oder alle Fahrzeuge derselben Konfiguration, da diese Fahrzeuge ähnliche Verschleißgrößen aufweisen und/oder in diesen Fahrzeugen gleiche Komponenten eingebaut sind. Bei der Auswahl der betreffenden Fahrzeuge kann beispielsweise nach dem Baujahr der Fahrzeuge oder nach der Herstellerfirma einer Komponente unterschieden werden, um die Fahrzeuge mit den betreffenden Komponenten zu erfassen, bei welchen sich eine signifikante Abweichung der Komponentenlebensdauer oder der Wartungsanforderungen gegenüber denjenigen Werten ergibt, welche dem bisherigen Wartungsalgorithmus zugrunde liegen.

Die Daten, welche zum Implementieren des neuen Wartungsalgorithmus im Fahrzeug erforderlich sind, werden in Schritt 9 über eine Telematikschnittstelle in die betroffenen Fahrzeuge übermittelt. In dieser Weise können beispielsweise neue Grenzwerte übermittelt werden. In den betroffenen Fahrzeugen wird mittels der übertragenen Daten der neue Wartungsalgorithmus implementiert.

Alternativ hierzu kann die Übertragung der Daten, welche zur Implementierung des neuen, verbesserten Wartungsalgorithmus erforderlich sind auch in einer Werkstatt, beispielsweise beim nächsten Werkstattaufenthalt eines Fahrzeugs erfolgen. Auch ein Datentransfer, welcher durch den Fahrzeughalter oder der Fahrer vorgenommen wird, beispielsweise über ein Mobiltelefon oder einen Datenträger ist möglich.

Das Wissen, welches aus den aufgetretenen Verschleißfällen erzeugt werden kann, kann sehr schnell zur Verbesserung der Wartungsintervalle und zur Vorbeugung von Pannen genutzt werden, und alle in das Verfahren eingebundene Fahrzeuge haben eine aktuelle Version des Wartungsalgorithmus implementiert.

Das Verfahren wird in Schritt 1 fortgesetzt, nachdem im Anschluss an eine Auswertung der Daten, welche in der Zentrale gespeichert sind, insbesondere der Belastungs- und Verschleißgrößen, der Zähler iⱼ auf Null gesetzt oder ein neuer Schwellwert nⱼ vorgegeben wird.

Das Verfahren kann vollständig automatisiert ablaufen, wenn vorher festgelegt wird, wie der Wartungsalgorithmus angepasst werden muss. Im einfachsten Fall werden Grenzwerte angepasst. Ausgehend von Startgrenzwerten, welche nicht zu niedrig angesetzt waren, wird bei jedem vollständigen Durchlauf des Verfahrens, der Grenzwert so lange optimiert, bis der Schwellwert nⱼ nicht mehr überschritten wird. Damit werden Pannen vorgebeugt.

Wird über die bisherige Betrachtung hinaus auch ein Werkstattaufenthalt, welcher von einer Wartungsinformation an den Fahrer ausgelöst wird, auch als verschleißbezogenes Ereignis betrachtet, so kann mittels des Verfahrens auch ein zu niedrig angesetzter Grenzwert für die Lebensdauer einer Fahrzeugkomponente nach oben hin korrigiert werden. Damit kann in vorteilhafter Weise das einzuhaltende Wartungsintervall verlängert werden.

Das Verfahren ist auch dazu geeignet für Fahrzeugkomponenten, für welche bei der Markteinführung eines Fahrzeugs keine Wartungsalgorithmen oder keine Grenzwerte für die Wartungsalgorithmen vorliegen, diese zu erzeugen und der Fahrzeugflotte bereitzustellen. Solche Fahrzeugkomponenten können beispielsweise Lichtmaschine, Anlasser und Abgaskatalysator sein.

## Patentansprüche

1. Verfahren zur Bereitstellung eines Wartungsalgorithmus für eine Fahrzeugflotte, mit welchem in jedem Fahrzeug der Fahrzeugflotte eine Wartungsinformation ermittelt werden kann, wobei
- in den Fahrzeugen der Fahrzeugflotte aus Sensordaten, welche indikativ für eine Belastung von Komponenten in den Fahrzeugen sind, Belastungsgrößen ermittelt werden und
- die Belastungsgrößen für einen vorgebbaren Zeitraum in den Fahrzeugen gespeichert (1) und bei einem verschleißbezogenen Ereignis zusätzlich Verschleißgrößen (4) erfasst werden, welche ein verschleißbezogenes Ereignis kennzeichnen, und
- die Belastungsgrößen und die Verschleißgrößen an eine Zentrale übermittelt werden, **dadurch gekennzeichnet, dass** in der Zentrale mittels der Belastungs- und Verschleißgrößen aller Fahrzeuge der bisherige Wartungsalgorithmus überprüft und gegebenenfalls ein verbesserter Wartungsalgorithmus abgeleitet (7) wird.

2. Verfahren nach Anspruch 1,
**dadurch gekennzeichnet,**
**dass** Daten zur Implementierung des verbesserten Wartungsalgorithmus an Fahrzeuge der Fahrzeugflotte übermittelt werden (9), und der verbesserte Wartungsalgorithmus in den Fahrzeugen mittels der übertragenen Daten implementiert wird.

3. Verfahren nach Anspruch 2,
**dadurch gekennzeichnet,**
**dass** die Daten zur Implementierung des verbesserten Wartungsalgorithmus an die Fahrzeuge der Fahrzeugflotte drahtlos übermittelt werden.

4. Verfahren nach Anspruch 1,
**dadurch gekennzeichnet,**
**dass** bei einem verschleißbezogenen Ereignis in einem Fahrzeug die Belastungsgrößen und die Verschleißgrößen vom Fahrzeug an die Zentrale drahtlos übertragen werden.

5. Verfahren nach Anspruch 1,
**dadurch gekennzeichnet,**
**dass** bei einem verschleißbezogenen Ereignis in einem Fahrzeug die Belastungsgrößen und die Verschleißgrößen während eines Werkstattaufenthalts (4) ausgelesen und an die Zentrale übertragen werden.

6. Verfahren nach einem der Ansprüche 1 bis 5,
**dadurch gekennzeichnet,**
**dass** das Verfahren automatisiert abläuft.

7. Verfahren nach Anspruch 6,
**dadurch gekennzeichnet**,
in der Zentrale von einer Datenverarbeitungseinrichtung automatisch mittels der Belastungs- und Verschleißgrößen Grenzwerte eines Wartungsalgorithmus ermittelt, und an die betreffenden Fahrzeuge der Fahrzeugflotte übertragen werden.

8. Verfahren nach einem der Ansprüche 1 bis 7,
**dadurch gekennzeichnet,**
**dass** zur Verbesserung des Wartungsalgorithmus jeweils die Verschleiß- und Belastungsgrößen von Fahrzeugen vergleichbarer Konfiguration ausgewertet werden.

9. Verfahren nach einem der vorhergehenden Ansprüche,
**dadurch gekennzeichnet,**
**dass**
- in der Zentrale einer vorgebbaren Kombination aus mindestens einer Belastungsgröße und mindestens einer Verschleißgröße ein Verschleißtyp zugeordnet wird, und
- ein Schwellwert für die Anzahl der Fälle eines Verschleißtyps vorgebbar ist, und
- der Wartungsalgorithmus verbessert wird, falls die Anzahl der tatsächlich aufgetretenen und ermittelten verschleißbezogenen Ereignisse eines Verschleißtyps über dem Schwellwert für diesen Verschleißtyp liegt.

10. Verfahren nach Anspruch 9,
**dadurch gekennzeichnet,**
**dass** der Schwellwert für die Anzahl der Fälle eines Verschleißtyps eine Funktion ist, welche von der Anzahl der Fahrzeuge eines betreffenden Fahrzeugtyps abhängt, welche an dem Verfahren teilnehmen.

## Claims

1. Method of devising a maintenance algorithm for a vehicle fleet, by means of which maintenance information can be determined in every vehicle of the vehicle fleet, whereby
- stress variables are determined in the vehicles of the vehicle fleet on the basis of sensor data, which is indicative of stress affecting components in the vehicles and
- the stress variables are stored (1) in the vehicles for a pre-settable period and, in the event of a wear-related event, wear variables (4) are additionally detected which characterise a wear-related event and
- the stress variables and the wear variables are transmitted to a central location, **characterised in that** the existing maintenance algorithm is checked at the central location on the basis of the stress and wear variables of all vehicles and an improved maintenance algorithm is derived (7) if necessary.

2. Method as claimed in claim 1,
**characterised in that**
data for implementing the improved maintenance algorithm is transmitted (9) to vehicles of the vehicle fleet and the improved maintenance algorithm is implemented in the vehicles on the basis of the transmitted data.

3. Method as claimed in claim 2,
**characterised in that**
the data for implementing the improved maintenance algorithm is transmitted wirelessly to the vehicles of the vehicle fleet.

4. Method as claimed in claim 1,
**characterised in that**,
when a wear-related event occurs in a vehicle, the stress variables and the wear variables are transmitted wirelessly from the vehicle to the central location.

5. Method as claimed in claim 1,
**characterised in that**
when a wear-related event occurs in a vehicle, the stress variables and the wear variables are read during a stop at a repair shop (4) and transmitted to the central location.

6. Method as claimed in one of claims 1 to 5,
**characterised in that**
the method runs on an automated basis.

7. Method as claimed in claim 6,
**characterised in that**
threshold values of a maintenance algorithm are derived by a data processing unit at the central location from the stress and wear variables on an automated basis and transmitted to the relevant vehicles of the vehicle fleet.

8. Method as claimed in one of claims 1 to 7,
**characterised in that**
the wear and stress variables of vehicles of a similar configuration are respectively evaluated in order to improve the maintenance algorithm.

9. Method as claimed in one of the preceding claims,
**characterised in that**
- a wear type is assigned to a pre-settable combination of at least one stress variable and at least one wear variable at the central location and
- a threshold value can be pre-set for the number of occurrences of a wear type and
- the maintenance algorithm is improved if the number of actual incidents which occurred and wear-related events of a wear type which were detected lies above the threshold for this wear type.

10. Method as claimed in claim 9,
**characterised in that**
the threshold value for the number of occurrences of a wear type is a function dependent on the number of vehicles of a relevant vehicle type participating in the method.

## Revendications

1. Procédé pour fournir un algorithme de maintenance pour un parc de véhicules, permettant de déterminer une information de maintenance dans chaque véhicule du parc de véhicules,
- des dimensions de contrainte étant déterminées dans les véhicules du parc de véhicules, à partir de données fournies par un capteur, qui sont indicatives pour une contrainte exercée sur des composantes dans les véhicules et
- les dimensions de contrainte étant sauvegardées sur une période prédéfinissable dans les véhicules (1) et lors d'un événement ayant trait à un phénomène d'usure, des dimensions relatives à l'usure (4) caractérisant un événement ayant trait à un phénomène d'usure étant détectées en supplément, et
- les dimensions de contrainte et les dimensions relatives à l'usure étant transmises à une centrale,
**caractérisé en ce que**
l'algorithme de maintenance précédent est vérifié à l'aide des dimensions de contrainte et des dimensions relatives à l'usure de tous les véhicules et le cas échéant un algorithme amélioré en est déduit (7).

2. Procédé selon la revendication 1,
**caractérisé en ce que** des données pour l'implémentation de l'algorithme de maintenance amélioré sont transmises à des véhicules du parc de véhicules (9) et l'algorithme de maintenance amélioré est implémenté dans les véhicules, à l'aide des données transmises.

3. Procédé selon la revendication 2,
**caractérisé en ce que** les données pour l'implémentation de l'algorithme amélioré sont transmises sans fil aux véhicules du parc de véhicules.

4. Procédé selon la revendication 1,
**caractérisé en ce que** dans le cas d'un évènement ayant trait à un phénomène d'usure dans un véhicule, les dimensions de contrainte et les dimensions relatives à l'usure sont transmises sans fil du véhicule à la centrale.

5. Procédé selon la revendication 1,
**caractérisé en ce que** dans le cas d'un évènement ayant trait à un phénomène d'usure dans un véhicule, les dimensions de contrainte et les dimensions relatives à l'usure sont lues pendant un séjour à l'atelier (4) et transmises à la centrale.

6. Procédé selon l'une quelconque des revendications 1 à 5,
**caractérisé en ce que** le procédé se déroule de façon automatisée.

7. Procédé selon la revendication 6,
**caractérisé en ce que** dans la centrale, un système de traitement de données détermine automatiquement des valeurs limites, à l'aide des dimensions de contrainte et des dimensions relatives à l'usure et les transmet aux véhicules concernés du parc de véhicules.

8. Procédé selon l'une quelconque des revendications 1 à 7,
**caractérisé en ce que** pour l'amélioration de l'algorithme de maintenance, les dimensions relatives à l'usure et les dimensions de contrainte de véhicules de configuration comparable sont respectivement évaluées.

9. Procédé selon l'une quelconque des revendications précédentes,
**caractérisé en ce que**
- dans la centrale, un type d'usure est associé à une combinaison d'au moins une dimension de contrainte et d'au moins une dimension relative à l'usure et
- une valeur seuil pour le nombre de cas d'un type d'usure est prédéfinissable, et
- l'algorithme de maintenance est amélioré si le nombre d'événements ayant trait à une usure qui on effectivement eu lieu et qui ont été déterminés et qui se rapportent à un type d'usure se situe au-dessus de la valeur seuil pour ce type d'usure.

10. Procédé selon la revendication 9,
**caractérisé en ce que** la valeur seuil pour le nombre de cas d'un type d'usure est une fonction qui dépend du nombre de véhicules d'un type de véhicule concerné qui participent au procédé.
